# EUROPÄISCHE PATENTSCHRIFT

(11) **EP 2 368 686 B1**
(45) Veröffentlichungstag und Bekanntmachung des Hinweises auf die Patenterteilung: **21.10.2020**
(21) Anmeldenummer: 11159879.3
(22) Anmeldetag: 25.03.2011
(51) Int. Cl.: B29C 45/14, B29C 45/26

(54) **Spritzgiessvorrichtung**
Injection moulding device
Dispositif de moulage par injection

(30) Priorität: 26.03.2010 AT 4912010
(43) Veröffentlichungstag der Anmeldung: 28.09.2011
(73) Patentinhaber: Georg Kaufmann Formenbau AG, 5453 Busslingen (CH)
(72) Erfinder: Kaufmann, Georg, 5442, Fislisbach (CH)
(74) Vertreter: Laminger, Norbert

(56) Entgegenhaltungen:
- WO-A1-00/12282
- WO-A1-03/053649
- DE-A1- 2 141 956
- JP-A- H0 952 257
- JP-A- H08 183 063
- JP-A- 2006 281 465
- US-A1- 2004 201 132

## Beschreibung

Die Erfindung betrifft eine Spritzgiessvorrichtung, insbesondere zum Hinterspritzen eines Obermaterials mit Kunststoff, mit einer Kavität, die zwischen einer Matrize und einem Formkern ausgebildet ist, mit einem an die Kavität anschließenden Tauchkantenspalt, der von einer matrizenseitigen Tauchkante und einer formkernseitigen Tauchkante begrenzt ist.

Unter dem Begriff "Obermaterial", werden in diesem Dokument beliebige in die Matrize einlegbare und hinterspritzbare Materialien, insbesondere Dekormaterialien, Stoffe, Folien, etc. verstanden.

Die JP 2006281465 A offenbart eine Spritzgiessvorrichtung, bei welcher separat vom Formkern des Werkzeugs eine Niederhaltekante für das zu hinterspritzende Obermaterial angeordnet ist, die auf einer unabhängig vom Formkern und der Matrize bewegbaren Entformplatte angebracht ist. Eine ähnliche Vorrichtung ist in der JP H08183063 A oder der WO 0012282 A1 offenbart.

Eine Abdichtung des Tauchkantenspaltes über ein entlang des Umfangs des Formkerns aufgetragenes aushärtbares Dichtmaterial, das in ausgehärtetem Zustand eine ringförmige Abdichtung der Kavität zwischen Formkern und Matrize ergibt, ist in der JP H09052257 A beschrieben. Zur Abdichtung der Kavität sind aber auch Vorrichtungen bekannt, bei welchen über radial ausfahrbare oder expandierbare Elemente der Tauchkantenspalt verschlossen und so das Austreten von Schmelze aus der Kavität verhindert werden soll. Beispielsweise ist eine derartige Anordnung in der US 2004201 132 A1 erläutert.

Eine Spritzgiessvorrichtung der eingangs genannten Art ist beispielsweise aus der EP 1 144 177 B1 bekannt geworden. Die bekannte Ausführungsform weist eine Matrize und einen Formkern auf, die einen in weiterer Folge als Kavität bezeichneten Hohlraum aufweisen. In das Werkzeug wird ein Obermaterial, beispielsweise ein Dekormaterial, eingelegt, welches durch Auffüllen der Kavität mit Kunststoff hinterspritzt wird, sodass das eingelegte Obermaterial an die Kavitätswand gepresst wird. Um eine Beschädigung des Obermaterials zu vermeiden wird der Kunststoff mit geringem Druck eingespritzt. Hierzu kann das Spritzgießwerkzeug zunächst noch nicht vollkommen geschlossen, sondern bleibt geringfügig geöffnet, beispielsweise 2 bis 10 mm. Um zu vermeiden, dass in dieser Position eingespritzter Kunststoff über den Randbereich der Kavität austritt, ist bei bekannten Spritzgießwerkzeugen die Matrizenformplatte mit einer so genannten Tauchkante versehen, d. h. einer Verlängerung der die Kavität begrenzenden Wand der Matrizenformplatte. Diese Tauchkante bildet zusammen mit einer gegenüberliegenden Tauchkante des Formkerns einen Tauchkantenspalt, der geringfügig, beispielsweise mit einem Winkel von 5°, konisch ausgebildet sein kann. Das vor dem Hinterspritzen in die Kavität eingelegte Obermaterial erstreckt sich auch in den Tauchkantenspalt hinein und wird beim vollständigen Schließen des Spritzgießwerkzeugs, das während des Einspritzens von Kunststoff erfolgt, im Tauchkantenspalt eingeklemmt. Um eine Veränderung des Tauchkantenspaltmaßes zu ermöglichen, wie es beispielsweise bei Verwendung von Obermaterialien unterschiedlicher Dicke erforderlich sein kann, ist die matrizenseitige Tauchkante als Schieber ausgebildet der im Wesentlichen normal zur Schließ- bzw. Verfahrensrichtung der Matrize und des Formkerns verläuft. Eine Verschiebung der Tauchkante erfolgt somit in radialer Richtung auf eine Längsmittelachse des Formkerns zu und normal zu einer tauchspaltseitigen Öffnungsrichtung der Kavität. Formkernseitig kann ebenfalls ein in Verschieberichtung der matrizenseitigen Tauchkante verschiebbarer Trennschieber vorgesehen sein. Durch Verschieben der matrizenseitigen Tauchkante bzw. des formkernseitigen Trennschiebers kann die Größe des Tauchkantenspalts variiert und an unterschiedliche Erfordernisse, beispielsweise unterschiedliche Dicken des zu hinterspritzenden Obermaterials, angepasst werden.

Nachteilig an dieser Ausführungsform ist vor allem, dass sie sich aufgrund der radialen Bewegungsrichtung der Tauchkante nicht gut für Ausführungsformen eignet, welche einen zumindest teilweise um einen Formkern umlaufenden Tauchspalt aufweisen, da sich bei einem gekrümmten oder geknickten Verlauf der Längserstreckung des Tauchkantenspaltes mit einer radial verschiebbaren Tauchkante der Austritt von Kunststoff aus der Kavität nicht zuverlässig verhindern lässt.

Es ist daher eine Aufgabe der Erfindung, die Einstellung der Größe des Tauchkantenspaltes auch bei einem zumindest teilweise um einen Formkern umlaufenden Tauchkantenspalt auf einfache Weise zu ermöglichen.

Diese Aufgabe wird mit einer Spritzgiessvorrichtung der eingangs genannten Art erfindungsgemäß dadurch gelöst, dass die formkernseitige Tauchkante durch eine Oberfläche eines Verschlusselementes mit einer äußeren Kontur gebildet ist, welches Verschlusselement an einer formkernseitigen Oberfläche geführt ist, wobei der Querschnittsdurchmesser der Kontur in Richtung der tauchspaltseitigen Öffnung der Kavität abnehmend ausgebildet ist, der kürzeste Abstand des Verschlusselement von der tauchspaltseitigen Öffnung der Kavität unabhängig von der Dicke des Obermaterials einstellbar ist, wobei eine Veränderung des Abstandes des Verschlusselementes von der Öffnung der Kavität mit einer Änderung des Abstandes zwischen den Tauchkanten verbunden ist.

Die erfindungsgemäße Lösung erlaubt eine kontinuierliche Einstellung des Abstandes zwischen der matrizenseitigen und der formkernseitigen Tauchkante unabhängig von der Form des Längsverlaufs des Tauchkantenspaltes, da die Bewegung des Verschlusselementes entlang einer Längsmittelgeraden des Formkerns und somit parallel zur Schließrichtung der Spritzgiessvorrichtung erfolgt. Erst durch die "vertikale" - d.h. in Öffnungs- bzw. Verschlussrichtung der Spritzgussvorrichtung verlaufende - Bewegungsrichtung des Verschlusselementes wird eine Abdichtung eines Tauchkantenspaltes variabler Größe und beliebigen Längskonturverlaufes ermöglicht. Durch die erfindungsgemäße Lösung wird somit eine flexible Tauchkante geschaffen. Die matrizenseitige Tauchkante kann, muss aber nicht, von einem Rahmen gebildet werden. Die erfindungsgemäße Lösung ist jedoch mit einem Rahmen als auch ohne realisierbar.

Gemäß einer vorteilhaften Variante der Erfindung können eine der matrizenseitigen Tauchkante zugewandte, die formkernseitige Tauchkante bildende Oberfläche des Verschlusselementes und eine dem Formkern zugewandte Oberfläche des Verschlusselementes unter einem spitzen Winkel in Richtung der Kavität aufeinander zulaufend ausgebildet sein. Auf diese Weise lässt sich die Größe des Tauchkantenspaltes auf einfache Weise kontinuierlich einstellen, da zur Veränderung des Abstandes der matrizen- und formkernseitigen Tauchkante voneinander lediglich das Verschlusselement in vertikaler Richtung verschoben wird.

Um eine besonders gute Abdichtung des Tauchkantenspaltes zu gewährleisten, kann die matrizenseitige Tauchkante als Auflauffläche für die formkernseitige Tauchkante ausgebildet sein.

Eine vorteilhafte Variante der Erfindung sieht vor, dass das Verschlusselement einen mit einem Gegenanschlag der Matrize zusammenwirkenden Anschlag zur Begrenzung der Bewegung des Verschlusselementes in Richtung der Matrize aufweisen kann. Der hiermit erzielte Vorteil besteht darin, dass sich durch den Anschlag eine definierte Endposition des Verschlusselementes realisieren und sich somit auch die Größe des Tauchkantenspaltes exakt einstellen lässt.

Ein dichtes Verschließen des Tauchkantenspaltes auch ohne eingelegtes Obermaterial, lässt sich dadurch erzielen, dass zumindest ein vorderer Abschnitt des Verschlusselementes und die matrizenseitige Tauchkante kongruent zueinander ausgebildet sind.

Entsprechend einer weiteren vorteilhaften Ausführungsform kann zur Einstellung der Position des Verschlusselementes zumindest ein Positionierungsmittel vorgesehen sein.

Um auf einfache Weise eine exakte und gesteuerte Einstellung des Verschlusselementes vornehmen zu können kann das Positionierungsmittel als Aktor, insbesondere als federelastischer Aktor, ausgebildet sein, wobei das Verschlusselement zwischen dem Aktor und der Kavität angeordnet sein kann. Der Aktor kann beispielsweise als Elektromotor oder als hydraulischer Aktor ausgebildet sein.

Gemäß einer Variante der Erfindung, die sich durch einen sehr einfachen Aufbau auszeichnet, kann das Positionierungsmittel auch durch zumindest eine Unterlegplatte realisiert sein.

Die oben genannte Aufgabe lässt sich auch mit einer Spritzgiessvorrichtung der eingangs genannten Art erfindungsgemäß dadurch lösen, dass die formkernseitige Tauchkante durch ein in einen Oberflächenabschnitt des Formkerns einlegbares und austauschbares Einlageelement gebildet ist, wobei der Formkern eine Aufnahme zur austauschbaren Befestigung von Einlageelementen unterschiedlicher Querschnittsdurchmesser aufweist.

Durch die Verwendung von Einlageelementen unterschiedlicher Dicken lässt sich auf einfache Weise die Größe des Tauchkantenspaltes einstellen, sodass mit ein und derselben Spritzgussvorrichtung Obermaterialien unterschiedlicher Dicken hinterspritzt werden können. Ein weiterer Vorteil dieser Lösung besteht ebenfalls darin, dass sich unabhängig von dem Konturverlauf des Tauchkantenspaltes eine optimale Abdichtung erzielen lässt.

Eine vorteilhafte Ausführungsform der Erfindung sieht vor, dass die Aufnahme als Nut ausgebildet ist. In die Nut können je nach Anforderung und gewünschter Größe des Tauchkantenspaltes Einlageelemente unterschiedlicher Dicken eingesetzt werden. Diese Variante der Erfindung ermöglicht somit ein einfaches Austauschen und Einsetzen der Einlageelemente.

Eine Variante der Erfindung, die sich durch eine einfache Herstellung und besonders gute Handhabung auszeichnet sieht vor, dass das die Einlageelemente als Bleche ausgeführt sind.

Um eine gute Befestigung der Einlageelemente in der Nut zu gewährleisten, können die Einlageelemente an ihren der Nut zugewandten Abschnitten im Wesentlichen kongruent zu der Nut ausgebildet sein.

Die Erfindung samt weiteren Vorteilen wird im Folgenden anhand einiger nicht einschränkender Ausführungsbeispiele näher erläutert, welche in den Zeichnungen dargestellt sind. In diesen zeigen:
Fig. 1 zeigt ein Detail einer erfindungsgemäßen Spritzgussvorrichtung ohne eingelegtes Obermaterial;
Fig. 2 zeigt einen Tauchkantenspalt variabler Größe der Spritzgussvorrichtung aus Fig. 1 mit eingelegtem Obermaterial im näheren Detail;
Fig. 3 zeigt einen Formkern einer erfindungsgemäßen Spritzgussvorrichtung mit einer durch ein Einlageelement gebildeten formkernseitigen Tauchkante und
Fig. 4 zeigt einen Schnitt durch eine erfindungsgemäße Spritzgussvorrichtung mit dem Formkern aus Fig. 3.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

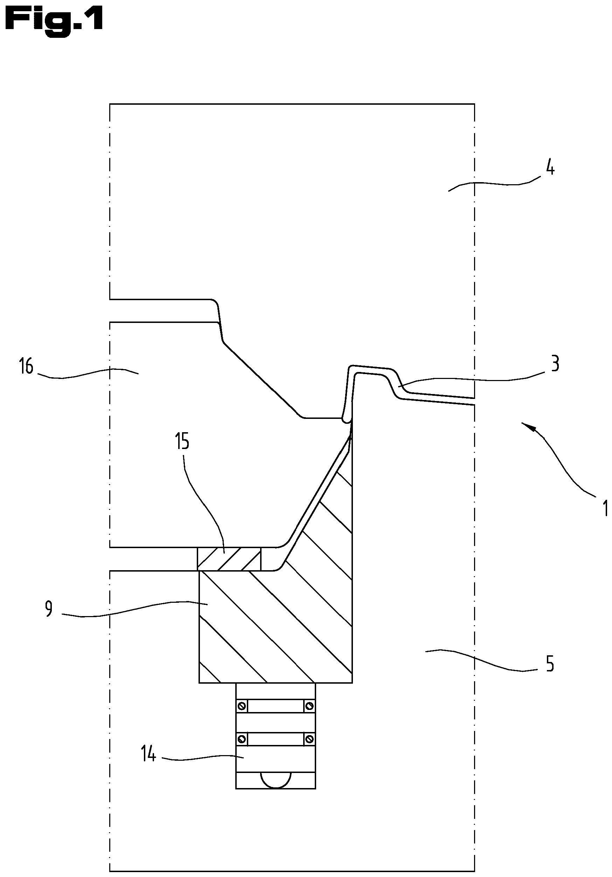

Weiters sind die Figuren 1 und 2 sowie 3 und 4 jeweils übergreifend beschrieben.

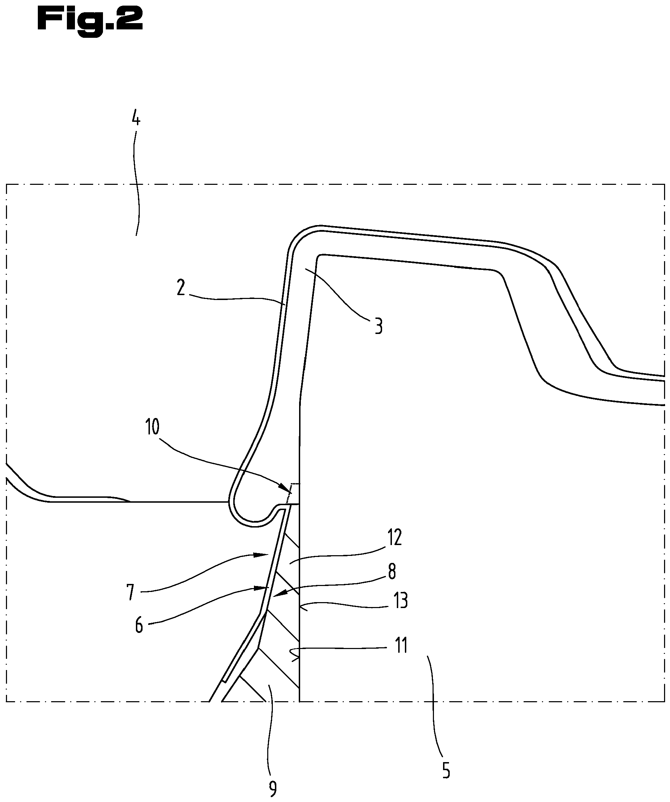

Gemäß Fig. 1 weist eine erfindungsgemäße Spritzgiessvorrichtung 1, welche insbesondere zum Hinterspritzen eines Obermaterials mit Kunststoff verwendet wird, eine Kavität 3 auf, die von einer Matrize 4 und einem Formkern 5 begrenzt ist. Bei der in Fig. 1 dargestellten Ausführungsform der Erfindung ist das in Fig. 2 mit dem Bezugszeichen 2 versehene Obermaterial nicht eingelegt. Gemäß einer Variante der Erfindung kann nämlich bei einem Ausspritzen der Kavität 3 auch auf das Obermaterial verzichtet werden.

Wie in Fig. 2 detaillierter dargestellt, schließt an die Kavität 3 ein Tauchkantenspalt 6 an, der von einer matrizenseitigen Tauchkante 7 und einer formkernseitigen Tauchkante 8 begrenzt ist. Die einander zugewandten Oberflächen der Tauchkanten 7 und 8 können im Wesentlichen parallel zueinander verlaufen. Gemäß der hier dargestellten Variante der Erfindung kann die matrizenseitige Tauchkante 7 von einem Abschnitt eines Rahmens gebildet werden. Die erfindungsgemäße Lösung ist jedoch sowohl mit Rahmen als auch ohne realisierbar. Bei einer Variante ohne Rahmen wird die matrizenseitige Tauchkante 7 von einem Oberflächenabschnitt der Matrize 4 gebildet.

Die formkernseitige Tauchkante 8 wird durch eine Oberfläche eines Verschlusselementes 9 gebildet. Der Querschnittsdurchmesser einer äußeren Kontur des Verschlusselementes 9 nimmt in Richtung der tauchspaltseitigen Öffnung 10 der Kavität 3 ab.

Durch Veränderung der Position des Verschlusselementes 9 entgegen oder in Richtung der Öffnung 10 kann der kürzeste Abstand des Verschlusselementes 9 von der tauchspaltseitigen Öffnung 10 der Kavität 3 eingestellt werden.

Eine Veränderung des Abstandes des Verschlusselementes 9 von der Öffnung 10 der Kavität 3 ist, wie aus Fig. 2 ersichtlich mit einer Änderung des Abstands zwischen den Tauchkanten 7 und 8 verbunden. Somit kann durch eine Bewegung des Verschlusselementes 9 in Werkzeugöffnungsrichtung die Größe des Tauchkantenspaltes 6, d.h. der Abstand zwischen den beiden Tauchkanten 7 und 8, verändert werden.

Das vor dem Hinterspritzen in die Kavität 3 oder Stempel 5 eingelegte Obermaterial 2 erstreckt sich auch in den Tauchkantenspalt 6 hinein und wird beim vollständigen Schließen der Spritzgiessvorrichtung 1, das während des Einspritzens von Kunststoff und/oder davor erfolgt, im Tauchkantenspalt 6 von den Tauchkanten 7 und 8 eingeklemmt. Der Tauchkantenspalt 6 dient in Verwendung mit dem Obermaterial 2 als Dichtung der Kavität 3. Weiters ragt das Obermaterial 2, wie aus Fig. 2 ersichtlich, mit einem Endbereich in eine zwischen dem Verschlusselement 9 und der Matrize befindliche an den Tauchkantenspalt 6 anschließende Freistellung hinein.

Wie aus der dargestellten Ausführungsform ersichtlich, können ein vorderer Abschnitt 12 des Verschlusselementes 9 und ein durch die matrizenseitige Tauchkante 7 und durch eine der matrizenseitigen Tauchkante gegenüberliegende Oberfläche 13 des Formkerns 5 begrenzter Spalt kongruent zueinander ausgebildet sein. Der aus Richtung der Kavität 3 betrachtet, vordere Abschnitt 12 des Verschlusselements 9 ist somit als Nase in den Spalt zwischen Formkern 5 und Matrize 4 ragenden Spalt ausgebildet.

Die der matrizenseitigen Tauchkante 7 zugewandte, die formkernseitige Tauchkante 8 bildende Oberfläche des Verschlusselementes 9 und eine dem Formkern 5 zugewandte Oberfläche 11 des Verschlusselementes 9 können hierbei unter einem spitzen Winkel in Richtung der Kavität 3 aufeinander zulaufen.

Um ein dichtes Verschließen der Kavität 3 auch für den Fall, dass kein Obermaterial 2 eingelegt wird, wie dies bei der in Fig. 1 gezeigten Ausführungsform der Fall ist, zu gewährleisten, kann die matrizenseitige Tauchkante 7 als Auflauffläche für die formkernseitige Tauchkante 8 ausgebildet sein.

Gemäß Fig. 1 kann ein Positionierungsmittel 14 zur Einstellung der Position des Verschlusselementes 9 vorgesehen sein. Dieses Positionierungsmittel 14 kann beispielsweise als unter dem Verschlusselement 9 angeordneter Aktor ausgebildet sein. Wie in Fig. 1 dargestellt, kann der Aktor als hydraulisch betätigbarer Kolben ausgeführt sein. An dieser Stelle sei jedoch darauf hingewiesen, dass die erfindungsgemäße Lösung nicht auf eine hydraulische Betätigung beschränkt ist. So könnte der Aktor beispielsweise auch ein pneumatischer, elektromechanischer, oder mechanischer Aktor sein. Gemäß einer vorteilhaften Variante der Erfindung kann der Aktor 14 als federnder Aktor ausgebildet sein, beispielsweise realisiert durch einen pneumatischen, hydropneumatischen oder hydraulischen Aktor. Dies ist insbesondere dann von Vorteil, wenn das Spritzgießwerkzeug erst während des Einspritzens des Kunststoffs vollständig verschlossen wird. Die Matrize 4 kann bei Verwendung eines federnden Aktors während einer Schließbewegung das Verschlusselement 9 in Schließrichtung und entgegen der von dem Aktor 14 auf das Verschlusselement 9 ausgeübten Kraft etwas zurückdrängen. Auf diese Weise lassen sich Beschädigungen des Obermaterials während des Schließens der Spritzgussvorrichtung sehr effizient vermeiden. Gleichzeitig wird aber auch ein gutes Abdichten der Kavität 3 bewirkt.

Das Verschlusselement 9 ist gegenüber dem Formkern 5 verschiebbar gelagert. Eine Führung des Verschlusselementes 9 kann durch die Oberfläche 13 erfolgen. Die Oberfläche 11 des Verschlusselementes 9 und die formkernseitige Oberfläche 13 sind hierbei parallel zueinander und zu einer Ausstoß- bzw. Werkzeugöffnungsrichtung sowie im rechten Winkel zu einer Maschinengrundplatte der Spritzgussvorrichtung 1 ausgerichtet. Zur Begrenzung der Bewegung des Verschlusselementes 9 kann ein Anschlag 15 vorgesehen sein, der mit einem Gegenanschlag 16 der Matrize 4 zusammenwirkt. In der hier dargestellten Variante der Erfindung wird der Gegenanschlag 16 von einem Rahmen gebildet. Dieser Rahmen ist aber nicht unbedingt erforderlich. Falls kein Rahmen bzw. Gegenanschlag vorgesehen ist, kann das Verschlusselement 9 bzw. der Anschlag 15 direkt mit der Matrize 4 zusammenwirken. Der Anschlag 15 kann beispielsweise je nach Beschaffenheit des Obermaterials 2 ausgewechselt werden. Somit kann die Größe des Tauchkantenspalts 6 durch die Dicke des Anschlags 15 eingestellt werden.

Alternativ zur Verwendung eines Aktors kann die Position des Verschlusselementes 9 auch mittels einer oder mehrerer Unterlegplatten eingestellt werden. Hierbei wird im Bedarfsfall die erforderliche Anzahl von Unterlegplatten unter dem Verschlussteil 9 angeordnet. Mittels der Unterlegplatten kann die gewünschte Höhe des Verschlusselementes 9, d.h. der Abstand des Verschlusselementes 9 zu der Öffnung 10 und somit die Größe des Tauchkantenspaltes 6, eingestellt werden.

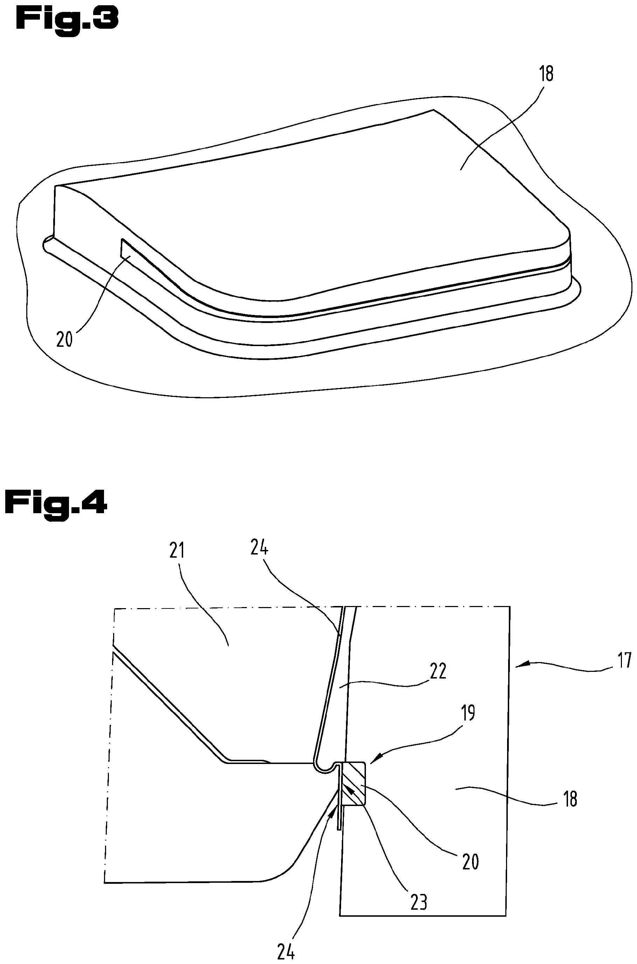

Gemäß den Fig. 3 und 4 kann eine erfindungsgemäße Spritzgiessvorrichtung 17 einen Formkern 18 aufweisen, der eine Aufnahme 19 aufweist, in welche ein Einlageelement 20 eingelegt werden kann. Das Einlageelement 20 kann aus der Aufnahme 19 wieder entfernt werden und gegen ein Einlageelement anderer Dicke ausgetauscht werden. Der Formkern 18 und eine Matrize 21 mit oder ohne Rahmen begrenzen hierbei wieder eine Kavität 22, welche in einen Tauchkantenspalt mündet. Das zu hinterspritzende Obermaterial 24 bildet auch hierbei in Verbindung mit dem Tauchkantenspalt eine Dichtung der Kavität 22 und ragt mit einem Endbereich in eine an den Tauchkantenspalt anschließende Freistellung.

Die Aufnahme 19 ist in der hier dargestellten Ausführungsform der Erfindung als Nut ausgebildet. Die Längserstreckung der Nut folgt im Wesentlichen der Längskontur des Tauchkantenspaltes. Die formkernseitige Tauchkante 23 wird hierbei durch einen dem Grund der Nut abgewandten Oberflächenabschnitt des Einlageelementes 20 gebildet. An ihren der Nut zugewandten Abschnitten kann das Einlageelement 20 im Wesentlichen kongruent zu der Nut ausgebildet sein. Das Einlageelement 20 kann den Rand der Nut bzw. der Aufnahme 19 in Richtung der matrizenseitigen Tauchkante überragen oder mit den Rand der Aufnahme im Wesentlichen 19 eben abschließen.

Weiters kann das Einlageelement 20 einstückig und als Blech oder gefertigtes Vollteil, vorzugsweise aus Metall, ausgebildet sein, wobei die Länge des Einlageelementes 20 zumindest der Länge der matrizenseitigen Tauchkante entspricht. Die Länge des Einlageelementes 20 kann sich beispielsweise über die gesamte Länge der Nut erstrecken.

Grundsätzlich wäre es auch möglich anstelle eines einzigen Einlageelementes 20 auch mehrere Einlageelemente zu verwenden, sodass die formkernseitige Tauchkante 23 in diesem Fall durch Oberflächenabschnitte mehrerer Einlageelemente gebildet werden würde. Einlageelemente von unterschiedlicher oder gleicher Dicke können auch bereichsweise eingelegt werden, sodass Bereiche mit Einlageelementen durch Abschnitte ohne Einlageelemente voneinander getrennt sind.

Zusammenfassend lässt sich sagen, dass durch die erfindungsgemäßen Ausführungsformen und Lösungen eine flexible Tauchkante geschaffen wird, welche die Einstellung der Größe des Tauchkantenspalts 6 in Abhängigkeit von den gegebenen Erfordernissen ermöglicht.

Abschließend sei festgehalten, dass die Ausführungsbeispiele lediglich mögliche Ausführungsvarianten der erfindungsgemäßen Lösung zeigen, wobei die Erfindung nicht auf die speziell dargestellten Ausführungsvarianten eingeschränkt ist. Insbesondere sind auch Kombinationen der einzelnen Ausführungsvarianten untereinander möglich, wobei diese Variationsmöglichkeiten aufgrund der Lehre zum technischen Handeln der gegenständlichen Erfindung im Können des auf diesem technischen Gebiet tätigen Fachmannes liegen.

## Patentansprüche

1. Spritzgiessvorrichtung (1), insbesondere zum Hinterspritzen eines Obermaterials (2) mit Kunststoff, mit einer Kavität (3), die zwischen einer Matrize und einem Formkern ausgebildet ist, mit einem an die Kavität (3) anschließenden Tauchkantenspalt (6), der von einer matrizenseitigen Tauchkante (7) und einer formkernseitigen Tauchkante (8) begrenzt ist, **dadurch gekennzeichnet, dass** die formkernseitige Tauchkante (8) durch eine Oberfläche eines Verschlusselementes (9) mit einer äußeren Kontur gebildet ist, welches Verschlusselement (9) an einer formkernseitigen Oberfläche (13) geführt ist, wobei der Querschnittsdurchmesser der Kontur in Richtung der tauchspaltseitigen Öffnung (10) der Kavität abnehmend ausgebildet ist, der kürzeste Abstand des Verschlusselementes (9) von der tauchspaltseitigen Öffnung (10) der Kavität (3) unabhängig von der Dicke des Obermaterials (2) einstellbar ist, wobei eine Veränderung des Abstandes des Verschlusselementes (9) von der Öffnung (10) der Kavität (3) mit einer Änderung des Abstandes zwischen den Tauchkanten (7, 8) verbunden ist.

2. Spritzgiessvorrichtung nach Anspruch 1, **dadurch gekennzeichnet, dass** die der matrizenseitigen Tauchkante (7) zugewandte, die formkernseitige Tauchkante (8) bildende Oberfläche des Verschlusselementes (9) und eine dem Formkern (5) zugewandte Oberfläche (11) des Verschlusselementes (9) unter einem spitzen Winkel in Richtung der Kavität (3) aufeinander zulaufend ausgebildet sind.

3. Spritzgiessvorrichtung nach Anspruch 1 oder 2, **dadurch gekennzeichnet, dass** die matrizenseitige Tauchkante (7) als Auflauffläche für die formkernseitige Tauchkante (8) ausgebildet ist.

4. Spritzgiessvorrichtung nach einem der Ansprüche 1 bis 3, **dadurch gekennzeichnet, dass** das Verschlusselement (9) einen mit einem Gegenanschlag (16) der Matrize (4) zusammenwirkenden Anschlag (15) zur Begrenzung der Bewegung des Verschlusselementes (9) in Richtung der Matrize (4) aufweist.

5. Spritzgiessvorrichtung nach einem der Ansprüche 1 bis 4, **dadurch gekennzeichnet, dass** zumindest ein vorderer Abschnitt (12) des Verschlusselementes (9) und ein durch die matrizenseitige Tauchkante (7) und durch eine der matrizenseitigen Tauchkante (7) gegenüberliegende Oberfläche (13) des Formkerns (5) begrenzter Spalt kongruent zueinander ausgebildet sind.

6. Spritzgiessvorrichtung nach einem der Ansprüche 1 bis 5, **dadurch gekennzeichnet, dass** zumindest ein Positionierungsmittel (14) zur Einstellung der Position des Verschlusselementes (9) vorgesehen ist.

7. Spritzgiessvorrichtung nach Anspruch 6, **dadurch gekennzeichnet, dass** das Positionierungsmittel (14) als Aktor ausgebildet ist, insbesondere als federelastischer Aktor, wobei das Verschlusselement (9) zwischen dem Aktor und der Kavität (10) angeordnet ist.

8. Spritzgiessvorrichtung nach Anspruch 7, **dadurch gekennzeichnet, dass** das Positionierungsmittel (14) durch zumindest eine Unterlegplatte realisiert ist.

9. Spritzgiessvorrichtung (17), insbesondere zum Hinterspritzen eines Obermaterials (23) mit Kunststoff, mit einer Kavität (22), die zwischen einer Matrize (20) und einem Formkern (18) ausgebildet ist, mit einem an die Kavität (21) anschließenden Tauchkantenspalt, der von einer matrizenseitigen Tauchkante und einer formkernseitigen Tauchkante (23) begrenzt ist, **dadurch gekennzeichnet, dass** die formkernseitige Tauchkante (23) durch ein in einen Oberflächenabschnitt des Formkerns (18) einlegbares und austauschbares Einlageelement (20) gebildet ist, wobei der Formkern (18) eine Aufnahme (19) zur austauschbaren Befestigung von Einlageelementen (20) unterschiedlicher Querschnittsdurchmesser aufweist.

10. Spritzgiessvorrichtung nach Anspruch 9, **dadurch gekennzeichnet, dass** die Aufnahme (19) als Nut ausgebildet ist.

11. Spritzgiessvorrichtung nach Anspruch 9 oder 10, **dadurch gekennzeichnet, dass** das die Einlageelemente (20) als Bleche oder Vollteile ausgeführt sind.

12. Spritzgiessvorrichtung nach Anspruch 10 oder 11, **dadurch gekennzeichnet, dass** die Einlageelemente (20) an ihren der Nut zugewandten Abschnitten im Wesentlichen kongruent zu der Nut ausgebildet sind.

## Claims

1. An injection molding device (1), in particular for back-injection molding of an outer material (2) with a plastic material, having a cavity (3), which is formed between a matrix and a mold core, having a vertical flash face gap (6) which adjoins the cavity (3) and is bounded by a matrix-side vertical flash face (7) and a mold-core-side vertical flash face (8), **characterized in that** the mold-core-side vertical flash face (8) is formed by a surface of a closure element (9) with an outer contour, said closure element (9) being guided on a mold-core-side surface (13), wherein the cross-sectional diameter of the contour is formed to decrease in the direction of the vertical-flash-face-side opening (10) of the cavity, the shortest distance of the closure element (9) from the vertical-flash-face-side opening (10) of the cavity (3) is adjustable independently of the thickness of the outer material (2), wherein a change in the distance of the closure element (9) from the opening (10) of the cavity (3) is associated with a change in the distance between the vertical flash faces (7, 8).

2. The injection molding device according to claim 1, **characterized in that** the surface of the closure element (9), which faces the matrix-side vertical flash face (7) and forms the mold-core side vertical flash face (8), and a surface (11) of the closure element (9) facing the mold core (5) are designed to run towards one another at an acute angle in the direction of the cavity (3).

3. The injection molding device according to claim 1 or 2, **characterized in that** the matrix-side vertical flash face (7) is designed as a ramp for the mold-core-side vertical flash face (8).

4. The injection molding device according to one of claims 1 to 3, **characterized in that** the closure element (9) comprises a stop (15) cooperating with a counter-stop (16) of the matrix (4) for limiting the movement of the closure element (9) in the direction of the matrix (4).

5. The injection molding device according to one of claims 1 to 4, **characterized in that** at least one front section (12) of the closure element (9) and a gap, which is delimited by the matrix-side vertical flash face (7) and by a surface (13) of the mold core (5) opposite to the matrix-side vertical flash face (7), are formed so as to be congruent to one another.

6. The injection molding device according to one of claims 1 to 5, **characterized in that** at least one positioning means (14) for adjusting the position of the closure element (9) is provided.

7. The injection molding device according to claim 6, **characterized in that** the positioning means (14) is formed as an actuator, in particular as a resilient actuator, wherein the closure element (9) is arranged between the actuator and the cavity (10).

8. The injection molding device according to claim 7, **characterized in that** the positioning means (14) is realized by at least one base plate.

9. An injection molding device (17), in particular for back-injection molding of an outer material (23) with a plastic material, having a cavity (22), which is formed between a matrix (20) and a mold core (18), having a vertical flash face gap which adjoins the cavity (21) and is bounded by a matrix-side vertical flash face and a mold-core-side vertical flash face (23), **characterized in that** the mold-core-side vertical flash face (23) is formed by an insert element (20) which can be inserted into a surface section of the mold core (18) and is exchangeable, wherein the mold core (18) has a holder (19) for the exchangeable attachment of insert elements (20) of different cross-sectional diameters.

10. The injection molding device according to claim 9, **characterized in that** the holder (19) is formed as a groove.

11. The injection molding device according to claim 9 or 10, **characterized in that** the insert elements (20) are designed as metal sheets or as solid parts.

12. The injection molding device according to claim 10 or 11, **characterized in that**, on their sections facing the groove, the insert elements (20) are formed to be essentially congruent with the groove.

## Revendications

1. Dispositif de moulage par injection (1), en particulier pour doubler un matériau de dessus (2) avec une matière plastique, avec une cavité (3) qui est constituée entre une matrice et un noyau de moule, avec un interstice d'arête de plongée (6), adjacent à la cavité (3), qui est limité par une arête de plongée (7) côté matrice et par une arête de plongée (8) côté noyau de moule, **caractérisé en ce que** l'arête de plongée (8) côté noyau de moule est formée par une surface d'un élément de fermeture (9) avec un contour extérieur, lequel élément de fermeture (9) est guidé sur une surface (13) côté noyau de moule, le diamètre de la section transversale du contour étant constitué en diminuant en direction de l'ouverture (10), côté interstice de plongée, de la cavité, la plus petite distance de l'élément de fermeture (9) à l'ouverture (10), côté interstice de plongée, de la cavité (3) étant réglable indépendamment de l'épaisseur du matériau de dessus (2), une modification de la distance de l'élément de fermeture (9) à l'ouverture (10) de la cavité (3) étant liée à une modification de la distance entre les arêtes de plongée (7, 8).

2. Dispositif de moulage par injection selon la revendication 1, **caractérisé en ce que** la surface de l'élément de fermeture (9) formant l'arête de plongée (8) côté noyau de moule et tournée vers l'arête de plongée (7) côté matrice, et une surface (11) de l'élément de fermeture (9) tournée vers le noyau de moule (5) sont formées en convergeant l'une vers l'autre en formant un angle aigu en direction de la cavité (3).

3. Dispositif de moulage par injection selon la revendication 1 ou 2, **caractérisé en ce que** l'arête de plongée (7) côté matrice est constituée en tant que surface de montée pour l'arête de plongée (8) côté noyau de moule.

4. Dispositif de moulage par injection selon l'une des revendications 1 à 3, **caractérisé en ce que** l'élément de fermeture (9) comporte une butée (15) coopérant avec une contre-butée (16) de la matrice (4) pour la limitation du mouvement de l'élément de fermeture (9) en direction de la matrice (4).

5. Dispositif de moulage par injection selon l'une des revendications 1 à 4, **caractérisé en ce qu'**au moins un tronçon (12) avant de l'élément de fermeture (9) et un interstice limité par l'arête de plongée (7) côté matrice et par une surface (13) du noyau de moule (5) opposée à l'arête de plongée (7) côté matrice sont constitués de façon congruente l'un avec l'autre.

6. Dispositif de moulage par injection selon l'une des revendications 1 à 5, **caractérisé en ce qu'**il est prévu au moins un moyen de positionnement (14) destiné au réglage de la position de l'élément de fermeture (9).

7. Dispositif de moulage par injection selon la revendication 6, **caractérisé en ce que** le moyen de positionnement (14) est constitué en tant qu'actionneur, en particulier en tant qu'actionneur à élasticité de ressort, l'élément de fermeture (9) étant disposé entre l'actionneur et la cavité (10).

8. Dispositif de moulage par injection selon la revendication 7, **caractérisé en ce que** le moyen de positionnement (14) est réalisé par au moins une cale d'épaisseur.

9. Dispositif de moulage par injection (17), en particulier pour doubler un matériau de dessus (23) avec une matière plastique, avec une cavité (22) qui est constituée entre une matrice (20) et un noyau de moule (18), avec un interstice d'arête de plongée, adjacent à la cavité (21), qui est limité par une arête de plongée côté matrice et par une arête de plongée (23) côté noyau de moule, **caractérisé en ce que** l'arête de plongée (23) côté noyau de moule est formée par un élément intercalaire (20) remplaçable et pouvant être inséré dans un tronçon superficiel du noyau de moule (18), le noyau de moule (18) comportant un logement (19) destiné à la fixation remplaçable d'éléments intercalaires (20) de différents diamètres de section transversale.

10. Dispositif de moulage par injection selon la revendication 9, **caractérisé en ce que** le logement (19) est constitué en tant que rainure.

11. Dispositif de moulage par injection selon la revendication 9 ou 10, **caractérisé en ce que** les éléments intercalaires (20) sont réalisés en tant que tôles ou pièces pleines.

12. Dispositif de moulage par injection selon la revendication 10 ou 11, **caractérisé en ce que**, au niveau de leurs tronçons tournés vers la rainure, les éléments intercalaires (20) sont formés essentiellement de façon congruente avec la rainure.
